(19) Europäisches Patentamt / European Patent Office / Office européen des brevets

(11) **EP 4 159 304 A1**

(12) **EUROPEAN PATENT APPLICATION**
published in accordance with Art. 153(4) EPC

(43) Date of publication:
**05.04.2023 Bulletin 2023/14**

(21) Application number: **21812081.4**

(22) Date of filing: **24.05.2021**

(51) International Patent Classification (IPC):
$B01D\ 61/14\ ^{(2006.01)}$    $B01D\ 61/18\ ^{(2006.01)}$
$B01D\ 69/00\ ^{(2006.01)}$    $B01D\ 69/02\ ^{(2006.01)}$
$B01D\ 69/10\ ^{(2006.01)}$    $B01D\ 69/12\ ^{(2006.01)}$
$B01D\ 71/06\ ^{(2006.01)}$    $B01D\ 71/34\ ^{(2006.01)}$
$C02F\ 3/12\ ^{(2006.01)}$    $C08J\ 9/26\ ^{(2006.01)}$
$C02F\ 1/44\ ^{(2006.01)}$

(52) Cooperative Patent Classification (CPC):
B01D 61/14; B01D 61/18; B01D 69/00;
B01D 69/02; B01D 69/10; B01D 69/12;
B01D 71/06; B01D 71/34; C02F 1/44; C02F 3/12;
C08J 9/26; Y02W 10/10

(86) International application number:
**PCT/JP2021/019654**

(87) International publication number:
**WO 2021/241514 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020 JP 2020094340**
**30.11.2020 JP 2020198370**

(71) Applicant: **Toray Industries, Inc.**
**Tokyo 103-8666 (JP)**

(72) Inventors:
• **KATO Satoshi**
**Otsu-shi, Shiga 520-8558 (JP)**
• **NISHIGUCHI Yoshiki**
**Otsu-shi, Shiga 520-8558 (JP)**
• **FURUNO Syuji**
**Otsu-shi, Shiga 520-8558 (JP)**
• **OGATA Masami**
**Otsu-shi, Shiga 520-8558 (JP)**

(74) Representative: **Hoefer & Partner Patentanwälte mbB**
**Pilgersheimer Straße 20**
**81543 München (DE)**

(54) **POROUS FILM AND COMPOSITE FILM**

(57) The present invention provides a porous film having a relief structure provided with protrusions and recesses on at least one surface. In a plane located at a height of 50 nm from a reference surface of the surface, the average number density of the protrusions having a cross-sectional area of 0.01 $\mu$m$^2$ to 0.10 $\mu$m$^2$ is 4.0 protrusions/$\mu$m$^2$ or less, and in a plane located at a height of 20 nm from the reference surface of the surface, the average number density of the protrusions having a cross-sectional area of from 0.01 $\mu$m$^2$ to 0.10 $\mu$m$^2$ is 1.0 protrusion/$\mu$m$^2$ or greater.

*FIG. 1*

EP 4 159 304 A1

**Description**

TECHNICAL FIELD

The present invention relates to a porous membrane and a composite membrane.

BACKGROUND ART

In recent years, porous membranes such as microfiltration membranes and ultrafiltration membranes have been used in various fields such as a water treatment field such as purified water treatment or drainage treatment, a medical field such as blood purification, and a food industry field.

In the porous membranes used in various ways as described above, a phenomenon called fouling occurs in which components such as a suspension whose permeation is blocked are deposited on a membrane surface and in the membrane, and in some cases, are adsorbed on a membrane surface and in the membrane to block fine pores of the membrane. Since this phenomenon substantially lowers the membrane performance, it is very important to reduce or prevent fouling. As a method of preventing fouling to a membrane, a method of making a membrane material hydrophilic is generally used. For example, Patent Literature 1 discloses a technique in which a membrane material is made hydrophilic such that the affinity with water is enhanced, and adsorption of hydrophobic microorganisms and mud is prevented.

In addition, from the viewpoint of membrane structure, it is generally considered that adhesion of dirt can be prevented by smoothing the surface as much as possible. Patent Literature 2 discloses a technique of reducing fouling by reducing surface unevenness.

CITATION LIST

PATENT LITERATURE

Patent Literature 1: JPH06-343843A
Patent Literature 2: US Patent Application Publication No. 2003/36085

SUMMARY OF INVENTION

TECHNICAL PROBLEM

However, in a case where a stock solution contains multiple components, such as a case where a stock solution containing activated sludge is treated in treatment of wastewater or natural water such as river water or groundwater, a sufficient fouling prevention effect cannot be obtained in many cases even when the membrane material is made hydrophilic or the membrane surface is made smooth.

Accordingly, an object of the present invention is to provide a porous membrane that achieves both excellent low-fouling properties and water permeability.

SOLUTION TO PROBLEM

In order to solve the above-mentioned problems, the present invention is characterized by the following (1) to (17).

(1) A porous membrane having a concave-convex structure including a convex portion and a concave portion on at least one surface of the porous membrane,

in which an average number density of the convex portion having a cross-sectional area of 0.01 $\mu m^2$ to 0.10 $\mu m^2$ in a plane having a height of 50 nm from a reference surface of the surface is 4.0/$\mu m^2$ or less, and
an average number density of the convex portion having a cross-sectional area of 0.01 $\mu m^2$ to 0.10 $\mu m^2$ in a plane having a height of 20 nm from the reference surface of the surface is 1.0/$\mu m^2$ or more.

(2) The porous membrane according to (1), in which the average number density of the convex portion having a cross-sectional area of 0.01 $\mu m^2$ to 0.10 $\mu m^2$ in a plane having a height of 50 nm from the reference surface of the surface is $1.0/\mu m^2$ or less.

(3) The porous membrane according to (1) or (2), in which a layer having the concave-convex structure has a thickness of 1 $\mu$m to 500 $\mu$m.

(4) The porous membrane according to any one of (1) to (3), in which the surface includes a polymer.

(5) The porous membrane according to (4), in which the polymer is a polymer including a polyvinylidene fluoride-based resin as a main component.

(6) The porous membrane according to (5), including a branched polyvinylidene fluoride-based resin as the polyvinylidene fluoride-based resin.

(7) The porous membrane according to any one of (4) to (6), in which a value of a and a value of b for the polymer are 0.27 to 0.39 and 0.22 to 0.60 respectively, which are determined by approximation by the following Formula 1 based on a rotation radius $<S^2>^{1/2}$ and an absolute molecular weight $M_w$ of the polymer that are measured by GPC-MALS (gel permeation chromatography equipped with a multi-angle light scattering detector).

$$<S^2>^{1/2} = bM_w{}^a \qquad \text{(Formula 1)}$$

(8) The porous membrane according to (7), in which the value of a is 0.29 to 0.33, and the value of b is 0.43 to 0.50.

(9) The porous membrane according to any one of (4) to (8), further including a surfactant.

(10) The porous membrane according to (9), including a surfactant having a polyoxyalkylene structure, a fatty acid ester structure, and a hydroxyl group.

(11) The porous membrane according to any one of (1) to (10),

in which an average pore diameter of the surface is 0.01 $\mu$m to 0.1 $\mu$m, and
a macrovoid having a short diameter of 60 $\mu$m or more is present.

(12) The porous membrane according to (11), in which a macrovoid having a short diameter of 80 $\mu$m or more is present.

(13) The porous membrane according to any one of (1) to (12), having a three-dimensional network structure.

(14) A composite membrane including the porous membrane according to any one of (1) to (13) and another layer.

(15) The composite membrane according to (14), in which the another layer is a support.

(16) The porous membrane according to any one of (1) to (13) or the composite membrane according to (14) or (15), being used for ultrafiltration or microfiltration.

(17) The porous membrane or composite membrane according to (16), being used for membrane separation activated sludge treatment.

ADVANTAGEOUS EFFECTS OF INVENTION

According to the present invention, it is possible to provide a porous membrane having both excellent low-fouling properties and water permeability.

BRIEF DESCRIPTION OF DRAWINGS

FIG. 1 is a diagram illustrating an example of an atomic force micrograph of a surface of a porous membrane.
FIG. 2 is a diagram illustrating an enlarged image of the porous membrane exemplifying "three-dimensional network structure".

DESCRIPTION OF EMBODIMENTS

Hereinafter, embodiments of the present invention will be described in detail with reference to the drawings, but the present invention is not limited thereto. In the present description, a ratio on a mass basis (percentage, part, or the like) is the same as a ratio on a weight basis (percentage, part, or the like).

(Porous Membrane)

In the porous membrane according to the present embodiment, a concave-convex structure including a convex portion and a concave portion on at least one surface must be provided, and an average number density of the convex portion having a cross-sectional area of 0.01 $\mu$m$^2$ to 0.10 $\mu$m$^2$ in a plane having a height of 20 nm from the reference surface of the surface must be 1.0/$\mu$m$^2$ or more. Hereinafter, in the present description, such a surface having a concave-convex structure may be referred to as a "specific surface". The porous membrane according to the present embodiment is suitable for treating natural water such as river water, or water containing a flocculant, activated sludge, or the like, as a stock solution. These liquids to be treated all contain various components, and in the case of water containing activated sludge, the liquid contains corpses, metabolites, and the like of microorganisms. In particular, a relatively large suspension of micron size is present as a component constituting fouling of the porous membrane. Therefore, by providing a convex portion and a concave portion on a surface of a membrane satisfying the above-described relation, that is, the porous membrane, it is possible to prevent generation of fouling, and to easily peel fouling even when fouling is generated. In the porous membrane according to the present embodiment, it is possible to reduce a contact area between relatively large particles in the stock solution and the porous membrane, and as a result, it is possible to prevent the suspension from adhering to the surface of the porous membrane. Accordingly, long-term stable operation is possible. In order to exhibit more excellent low-fouling properties, in the specific surface, the average number density of the convex portion having a cross-sectional area of 0.01 $\mu$m$^2$ to 0.10 $\mu$m$^2$ in a plane having a height of 20 nm from the reference surface of the surface is preferably 1.5/$\mu$m$^2$ or more.

Since the convex portion has no or few holes, in order to exhibit high water permeability, the average number density of the convex portion having a cross-sectional area of 0.01 $\mu$m$^2$ to 0.10 $\mu$m$^2$ in a plane having a height of 50 nm from the reference surface of the surface on the specific surface must be 4.0/$\mu$m$^2$ or less. The average number density of the convex portion having a cross-sectional area of 0.01 $\mu$m$^2$ to 0.10 $\mu$m$^2$ in a plane having a height of 50 nm from the reference surface of the surface on the specific surface is preferably 1.0/$\mu$m$^2$ or less. In addition, the average number density of the convex portion having a cross-sectional area of 0.01 $\mu$m$^2$ to 0.10 $\mu$m$^2$ in a plane having a height of 50 nm from the reference surface of the surface on the specific surface may be 0/$\mu$m$^2$.

In order to exhibit higher water permeability, the average number density of the convex portion having a cross-sectional area of 0.01 $\mu$m$^2$ to 0.10 $\mu$m$^2$ in a plane having a height of 20 nm from the reference surface of the surface on the specific surface is preferably 4.5/$\mu$m$^2$ or less.

Examples of the component constituting fouling of the porous membrane include a component that penetrates into fine pores and blocks the fine pores. By providing a convex portion and a concave portion having appropriate heights on the surface of the porous membrane, it is possible to disturb a flow on the surface of the porous membrane and prevent the generation of fouling. Accordingly, long-term stable operation is possible.

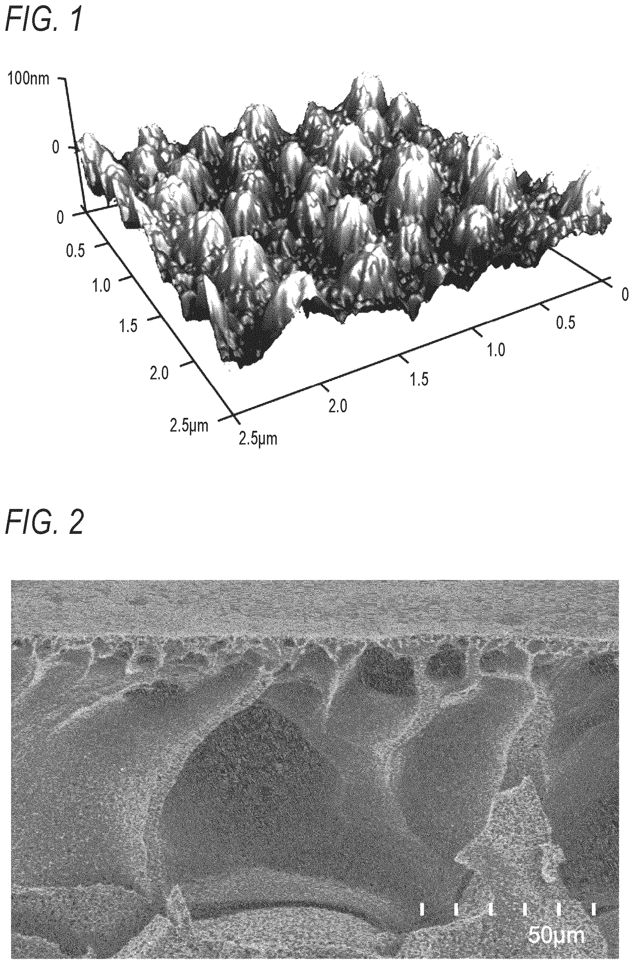

Here, the cross-sectional area of the convex portion in each plane having a height of 50 nm and 20 nm from the reference surface of the surface is obtained based on an image obtained by observing a surface of a porous membrane sample in a contact mode using an atomic force microscope in the air, randomly selecting a region of 2.5 $\mu$m square, and measuring the region. Regarding the image obtained by the above-mentioned measurement as illustrated in FIG. 1, the reference surface is obtained, and the cross-sectional area of each convex portion in a cross section in a direction parallel to the reference surface at positions having a height of 50 nm and 20 nm from the reference surface is calculated.

The reference surface is a plane defined based on surface texture (surface roughness measurement) of the international standard ISO 25178, and is an average height plane of a measured surface in an evaluation area.

The average number density of the convex portion having a cross-sectional area of 0.01 $\mu$m$^2$ to 0.10 $\mu$m$^2$ in each plane having a height of 50 nm and 20 nm from the reference surface of the surface is calculated based on a value obtained by counting convex portions having a cross-sectional area of 0.01 $\mu$m$^2$ to 0.10 $\mu$m$^2$ in a cross section in a direction parallel to the reference surface at each position having a height of 50 nm and 20 nm from the reference surface, which is obtained from the above-mentioned measurement of the cross-sectional area of the convex portion, and dividing the counted convex portions by the area of the measured region.

In the porous membrane according to the present embodiment, the thickness of the layer having the concave-convex structure is preferably 1 $\mu$m to 500 $\mu$m. When the thickness of the layer having the concave-convex structure is equal to or more than the above-mentioned lower limit value, breakage of the porous membrane can be prevented, and dirt components can be sufficiently removed. In addition, when the thickness of the layer having the concave-convex structure is equal to or less than the above-mentioned upper limit value, a water permeation amount can be sufficient. The thickness of the layer having the concave-convex structure is more preferably in a range of 5 $\mu$m to 200 $\mu$m. Here, the layer having the concave-convex structure means a layer formed of the same material as the material forming the concave-convex structure. In other words, the layer having the concave-convex structure means a scope including a surface having a concave-convex structure and being formed of the same material continuously with the surface. When the porous membrane is formed by coagulating one kind of material, for example, a polymer solution having one composition, the thickness of the layer having the concave-convex structure is usually the same as the thickness of the porous membrane.

The porous membrane according to the present embodiment can be formed of ceramics, metal, carbon, polymer, or the like, or a combination thereof. From the viewpoint of handleability and economical efficiency due to weight, size, and softness, the surface (layer on the outermost surface side) preferably contains a polymer. Specifically, the surface (layer on the outermost surface side) preferably contains a polymer in an amount of 50 mass% or more, and more preferably 70 mass% or more.

As the polymer, a polyethylene resin, a polypropylene resin, a polyvinyl chloride resin, a polyvinylidene fluoride resin, a polysulfone resin, a polyether sulfone resin, a polyimide resin, a polyetherimide resin, or the like can be used. The polymer is more preferably a polymer containing a polyvinylidene fluoride-based resin as a main component. The polyvinylidene fluoride-based resin refers to a vinylidene fluoride homopolymer or a vinylidene fluoride copolymer. Here, the vinylidene fluoride copolymer refers to a polymer having a vinylidene fluoride residue structure, and is typically a copolymer of a vinylidene fluoride monomer and another fluorine-based monomer or the like. Examples of such a fluorine-based monomer include vinyl fluoride, tetrafluoroethylene, hexafluoropropylene, and chlorotrifluoroethylene. The vinylidene fluoride copolymer may be copolymerized with ethylene or the like other than the fluorine-based monomer to an extent that the effect of the present invention is not impaired.

A weight average molecular weight of the polyvinylidene fluoride-based resin is preferably 50,000 to 1,000,000. When the weight average molecular weight is equal to or less than the above-mentioned upper limit value, the water permeability of the porous membrane can be improved, and when the weight average molecular weight is equal to or more than the above-mentioned lower limit value, the low-fouling properties of the porous membrane can be improved. When the porous membrane is used for water treatment that is subjected to chemical cleaning, the weight average molecular weight is preferably 100,000 or more, and more preferably 150,000 or more. The weight average molecular weight is preferably 900,000 or less, and more preferably 800,000 or less.

The phrase "containing a polyvinylidene fluoride-based resin as a main component" means that a ratio of the polyvinylidene fluoride-based resin in the polymer constituting the porous membrane is 50 mass% or more. In order to ensure high chemical resistance, the ratio is preferably 55 mass% or more, and more preferably 60 mass% or more. Examples of an accessory component other than the polyvinylidene fluoride-based resin include, but are not limited to, an acrylic resin that controls the hydrophilicity of the porous membrane.

In the present embodiment, the polymer preferably contains a branched polyvinylidene fluoride-based resin among polyvinylidene fluoride-based resins. In addition, it is more preferable that a value of a and a value of b for the polymer constituting the porous membrane, which are determined based on the relation of the following formula 1, are 0.27 to 0.39 and 0.22 to 0.60 respectively.

$$\langle S^2 \rangle^{1/2} = bM_w{}^a \quad \text{(Formula 1)}$$

Here, $\langle S^2 \rangle^{1/2}$ means a rotation radius of the polymer, and $M_w$ means an absolute molecular weight. By containing a highly branched polyvinylidene fluoride-based resin, the ranges of a and b described above can be satisfied.

When the value of a is 0.39 or less, the rotation radius $\langle S^2 \rangle^{1/2}$ becomes appropriately small with respect to the absolute molecular weight $M_w$ of the polymer, and the polymer easily moves to a surface layer of the porous membrane when the porous membrane is formed. As a result, the polymer density of the surface layer of the porous membrane is increased, and thus it is presumed that the porous membrane exhibits excellent low-fouling properties. On the other hand, when the value of a is 0.27 or more, polymers are appropriately entangled with each other and the polymer density of the surface layer becomes uniform, and it is presumed that higher low-fouling properties are exhibited. Further, since the polymer density of an inner layer decreases as the polymer density of the surface layer of the porous membrane increases, it is presumed that high water permeability is exhibited with excellent low-fouling properties. The value of a is more preferably 0.29 to 0.33.

The value of b for the polymer is preferably 0.22 to 0.60, and more preferably 0.43 to 0.50, in order to further improve the low-fouling properties by homogenizing the polymer density of the surface layer due to entanglement of the polymers.

In order to provide the concave-convex structure on the surface of the porous membrane, the value of a for the polymer is preferably 0.27 to 0.39, and the value of b for the polymer is preferably 0.22 to 0.60.

The values of a and b can be determined based on the relation between the rotation radius $\langle S^2 \rangle^{1/2}$ and the absolute molecular weight $M_w$ that are measured by GPC-MALS which is a gel permeation chromatography (hereinafter, referred to as "GPC") provided with a multi-angle light scattering detector (hereinafter, referred to as "MALS") and a differential refractometer (hereinafter, referred to as "RI"). The measurement by the GPC-MALS is performed by dissolving the polymer constituting the porous membrane in a solvent. In order to improve the solubility of the polymer, a salt may be added to the solvent. When the polyvinylidene fluoride-based resin is measured by the GPC-MALS, N-methyl-2-pyrrolidone (hereinafter, referred to as "NMP") to which 0.1 mol/L of lithium chloride is added is preferably used as the solvent, for example.

The values of a and b can be determined by approximating the relation between the rotation radius $\langle S^2 \rangle^{1/2}$ and the absolute molecular weight $M_w$ that are measured by the GPC-MALS as in the following formula 1 by a method generally used in a research of a polymer, which is called a conformation plot. Such a method is common as described in, for example, "Size Exclusion Chromatography" (written by Mori Sadao, Kyoritsu Shuppan Co., Ltd., First Edition, 1992). Incidentally, the approximation by the conformation plot may be performed in a manner of linear approximation by using the formula 1 as a log-log graph and applying the least squares method, within a measurement range of the detector.

$$\langle S^2 \rangle^{1/2} = bM_w^a \quad \text{(Formula 1)}$$

In the porous membrane according to the present embodiment, in order to increase the polymer density of the surface layer and exhibit excellent low-fouling properties, the average pore diameter of the surface is preferably in a range of 0.01 $\mu$m to 0.1 $\mu$m on the specific surface. The average pore diameter of the surface of the porous membrane is more preferably 0.02 $\mu$m or more, and still more preferably 0.03 $\mu$m or more. In addition, the average pore diameter of the surface of the porous membrane is more preferably 0.08 $\mu$m or less, more preferably 0.06 $\mu$m or less, and still more preferably 0.04 $\mu$m or less.

The average pore diameter of the surface of the porous membrane is measured as follows.

The surface of the porous membrane is observed at a magnification of 10,000 times using a scanning electron microscope (hereinafter, referred to as SEM), and based on an area of each pore, a diameter when assuming that the pore is a circle is calculated as a pore diameter, and an average value thereof can be considered as the average pore diameter of the surface.

In the porous membrane according to the present embodiment, it is preferable that a macrovoid having a short diameter of 60 $\mu$m or more is present in order to reduce a flow resistance when permeated water flows through the porous membrane. Here, the macrovoid is a large void having a short diameter of 10 $\mu$m or more, which is present in the porous membrane. In addition, the macrovoid is preferably present in a region (layer) formed by containing the polymer in the porous membrane. The term "short diameter" refers to a diameter in a direction parallel to the surface of the porous membrane. In the present embodiment, it is preferable that a macrovoid having a short diameter of 70 $\mu$m or more is present in the porous membrane, and it is more preferable that a macrovoid having a short diameter of 80 $\mu$m or more is present in the porous membrane.

In the porous membrane according to the present embodiment, it is preferable that at least a part of the macrovoid is present in a region within 5 $\mu$m from the surface of the porous membrane in order to reduce the flow resistance when the permeated water flows through the porous membrane and to exhibit high water permeability. A distance of the macrovoid from the surface is more preferably 4 $\mu$m or less, and still more preferably 3 $\mu$m or less. It is more preferable that the distance from the specific surface to the macrovoid is within the above-mentioned ranges.

In order to reduce the flow resistance when the permeated water flows through the porous membrane, a porosity occupied by the macrovoid in a region within 15 $\mu$m from the surface of the porous membrane according to the present embodiment is preferably 15% or more, more preferably 25% or more, and still more preferably 40% or more. In addition, it is more preferable that the porosity occupied by the macrovoid in a region within 15 $\mu$m from the specific surface is within the above-mentioned ranges.

On the other hand, from the viewpoint of the strength of the porous membrane, the size of the macrovoid is preferably limited to a short diameter of 300 $\mu$m or less. The distance from the surface of the porous membrane to the macrovoid is preferably 1 $\mu$m or more from the surface. The porosity occupied by the macrovoid in the region within 15 $\mu$m from the surface of the porous membrane is preferably 80% or less.

In order to reduce the flow resistance when the permeated water flows through the porous membrane, a ratio of the short diameter of the macrovoid to the average pore diameter of the surface of the porous membrane according to the present embodiment is preferably 700 or more, and more preferably 1,000 or more. The ratio is more preferably a ratio of the short diameter of the macrovoid to the average pore diameter of the specific surface.

Here, the size of the macrovoid present in the porous membrane and the porosity of the porous membrane can be obtained by observing a cross section in a direction perpendicular to the surface of the porous membrane with a scanning electron microscope (hereinafter, referred to as "SEM").

The porous membrane according to the present embodiment preferably has a three-dimensional network structure in order to further enhance a separation performance by homogenizing the polymer density of the surface layer due to entanglement of the polymers. Here, the term "three-dimensional network structure" refers to a structure in which the polymer constituting the porous membrane according to the present embodiment is three-dimensionally spread in a network shape, as illustrated in FIG. 2. The three-dimensional network structure has fine pores and voids partitioned by the polymer forming the network.

(Composite Membrane)

The composite membrane according to the present embodiment includes the porous membrane according to the present embodiment and another layer.

The above-mentioned another layer is not particularly limited as long as the another layer is a component capable of overlapping with the porous membrane to form a layer. The above-mentioned another layer is preferably a support. Here, the term "support" refers to a substance that supports a porous membrane to impart strength to a composite membrane. The material of the support is not particularly limited, such as an organic material and an inorganic material, and is preferably an organic fiber from the viewpoint of easy weight reduction. The material is more preferably a woven fabric or nonwoven fabric made of organic fibers such as cellulose fibers, cellulose triacetate fibers, polyester fibers, polypropylene fibers, and polyethylene fibers. In particular, the material is preferably a nonwoven fabric that is relatively easy to control the density, easy to manufacture, and inexpensive.

When the thickness of the support is too small, it is difficult to maintain the strength of the composite membrane, and when the thickness is extremely large, the water permeability tends to decrease. Therefore, the thickness is preferably in a range of 50 $\mu$m to 1 mm. The thickness of the support is most preferably in a range of 70 $\mu$m to 500 $\mu$m.

The thickness of the porous membrane is preferably 50 $\mu$m or more, more preferably 80 $\mu$m or more, and still more preferably 100 $\mu$m or more. In addition, the thickness of the porous membrane is preferably 500 $\mu$m or less, more preferably 300 $\mu$m or less, and still more preferably 200 $\mu$m or less. When the porous membrane is too thin, the support may be exposed, and dirt components may adhere to the support to increase the filtration pressure, or the filtration performance may not be sufficiently recovered even after cleaning. On the other hand, when the porous membrane is too thick, the water permeation amount may decrease.

It is preferable that a part of the resin forming the porous membrane enters at least a surface layer portion of the support to form a composite layer with the support at least in the surface layer portion. When the resin enters the support, the porous membrane is firmly fixed to the support by a so-called anchoring effect, and the porous membrane can be prevented from peeling off from the support.

For the porous membrane or composite membrane according to the present embodiment, from the viewpoint that an operating pressure can be lowered and the viewpoint that a progress of fouling can be prevented, the pure water permeability at 25°C and 5 kPa is preferably 0.15 m$^3$/m$^2$/hr or more, and more preferably 0.5 m$^3$/m$^2$/hr or more.

(Method for Manufacturing Porous Membrane or Composite Membrane)

The porous membrane or composite membrane according to the present embodiment described above can be typically manufactured by a method described below.

The porous membrane or composite membrane according to the present embodiment can be manufactured, for example, by a method including the following steps (1) and (2).

(1) A polymer solution preparing step of obtaining a polymer solution by using a polymer, a pore forming agent, and a solvent, and dissolving the polymer. Here, the polymer preferably contains a polyvinylidene fluoride-based resin as a main component.
(2) A porous membrane forming step of forming a porous membrane by coagulating the polymer solution in a coagulation bath containing a non-solvent.

When manufacturing a composite membrane, in step (2), it is preferable to form a porous membrane on at least one surface of another layer, preferably the support. That is, first, a coating film of a stock solution (polymer solution) containing the resin (polymer), the pore forming agent, and the solvent described above is formed on the surface of the above-described support, and the stock solution is impregnated into the support. Thereafter, the support is immersed in the coagulation bath containing a non-solvent to coagulate the resin, and a porous membrane is formed on the surface of the support. It is also preferable that the stock solution further contains a non-solvent. The temperature of the stock solution is usually preferably selected in a range of 15°C to 120°C from the viewpoint of membrane forming property.

The density of the support is preferably 0.7 g/cm$^3$ or less, and more preferably 0.6 g/cm$^3$ or less. When the density of the support is in the ranges, the support is suitable for receiving the resin forming the porous membrane and forming an appropriate composite layer of the support and the resin. However, when the density is extremely low, the strength of the composite membrane tends to decrease, and thus the density of the support is preferably 0.3 g/cm$^3$ or more. The density referred to herein is an apparent density, and can be determined based on the area, thickness, and weight of the support.

The pore forming agent is extracted when the support is immersed in the coagulation bath, and has a function of making a resin layer porous. The pore forming agent is preferably highly soluble in the coagulation bath. For example, inorganic salts such as calcium chloride and calcium carbonate can be used. In addition, polyoxyalkylenes such as polyethylene glycol (PEG) and polypropylene glycol, water-soluble polymers such as polyvinyl alcohol, polyvinyl butyral, and polyacrylic acid, glycerin, and surfactants can be used. The pore forming agent can be optionally selected, and a polymer containing PEG as a main component or a surfactant is preferable.

In particular, when using a polyvinylidene fluoride-based resin in which the value of a and the value of b for the polymer are 0.27 to 0.39 and 0.22 to 0.60 respectively, which are determined based on the relation of the above-mentioned formula 1, it is preferable to use a polymer containing PEG having a weight average molecular weight of 10,000 to 50,000 as a main component, or a surfactant having a polyoxyalkylene structure, a fatty acid ester structure, and a hydroxyl group as the pore forming agent. Such a pore forming agent is suitable for setting the average number density of the convex portion having a cross-sectional area of 0.01 $\mu m^2$ to 0.10 $\mu m^2$ in a plane having a height of 50 nm from the reference surface to 4.0/$\mu m^2$ or less, and setting the average number density of the convex portion having a cross-sectional area of 0.01 $\mu m^2$ to 0.10 $\mu m^2$ in a plane having a height of 20 nm from the reference surface to 1.5/$\mu m^2$ or more. In addition, as the pore forming agent, it is particularly preferable to use a surfactant having a polyoxyalkylene structure, a fatty acid ester structure, and a hydroxyl group. Such a pore forming agent is particularly suitable for setting the average number density of the convex portion having a cross-sectional area of 0.01 $\mu m^2$ to 0.10 $\mu m^2$ in a plane having a height of 50 nm from the reference surface to 1.0/$\mu m^2$ or less, and setting the average number density of the convex portion having a cross-sectional area of 0.01 $\mu m^2$ to 0.10 $\mu m^2$ in a plane having a height of 20 nm from the reference surface to 1.5/$\mu m^2$ or more.

Examples of the surfactant having a polyoxyalkylene structure, a fatty acid ester structure, and a hydroxyl group include polyethylene glycol monooleate, polyethylene glycol monostearate, polyoxyethylene sorbitan monolaurate (Tween 20), polyoxyethylene sorbitan monopalmitate (Tween 40), polyoxyethylene sorbitan monostearate (Tween 60), and polyoxyethylene sorbitan monooleate (Tween 80).

The solvent dissolves the resin. The solvent acts on the resin and the pore forming agent to promote formation of the porous membrane by the resin and the pore forming agent. As the solvent, NMP, N,N-dimethylacetamide (DMAc), N,N-dimethylformamide (DMF), dimethyl sulfoxide (DMSO), acetone, methyl ethyl ketone, or the like can be used. In particular, NMP, DMAc, DMF, and DMSO having high solubility of the resin can be preferably used.

The non-solvent is a liquid that does not dissolve the resin. The non-solvent acts to control sizes of the fine pores and the macrovoid by controlling the coagulation rate of the resin. As the non-solvent, water and alcohols such as methanol and ethanol can be used. In particular, water and methanol are preferable as the non-solvent from the viewpoint of ease of wastewater treatment and the price. The non-solvent may be a mixture containing these.

In the polymer solution preparing step, it is preferable to obtain a polymer solution (stock solution) by using a polymer (resin), a pore forming agent, and a solvent, and dissolving the polymer. Here, the polymer preferably contains a polyvinylidene fluoride-based resin as a main component. It is also preferable that the stock solution contains a non-solvent. In the stock solution, it is preferable that the resin is 5 weight% to 30 weight%, the pore forming agent is 0.1 weight% to 15 weight%, the solvent is 40 weight% to 94.9 weight%, and the non-solvent is 0 weight% to 20 weight%.

When the content of the resin is extremely small, the strength of the porous membrane is lowered, and when the content of the resin is excessively large, the water permeability may be lowered. The content of the resin in the stock solution is more preferably in a range of 8 weight% to 20 weight%. When the content of the pore forming agent is too small, the water permeability may be lowered, and when the content of the pore forming agent is too large, the strength of the porous membrane may be lowered. In addition, when the content is extremely large, the pore forming agent may remain in the porous membrane and elute during use, and the water quality of the permeated water may deteriorate or the water permeability may vary. A more preferable range of the content of the pore forming agent in the stock solution is 0.5 weight% to 10 weight%. Further, when the content of the solvent is too small, the stock solution tends to gel, and when the content of the solvent is too large, the strength of the porous membrane may be lowered. The content of the solvent in the stock solution is more preferably in a range of 60 weight% to 90 weight%.

When a non-solvent is added to the stock solution, the size of the fine pores on the surface of the porous membrane tends to be uniform, which is preferable. In addition, it is also easy to control the size of the macrovoid. However, when the ratio of the non-solvent in the stock solution is too large, gelation of the stock solution is likely to occur. In the stock solution, the solvent is preferably in a range of 40 weight% to 94.8 weight%, and the non-solvent is preferably in a range of 0.1 weight% to 20 weight%. More preferably, the solvent is in a range of 40 weight% to 94.4 weight%, and the non-solvent is in a range of 0.5 weight% to 15 weight%.

In the porous membrane forming step, it is preferable to form a porous membrane by coagulating the above-described polymer solution (stock solution) in a coagulation bath containing a non-solvent. As the coagulation bath, a non-solvent or a mixed solution containing a non-solvent and a solvent can be used. In the coagulation bath, when a non-solvent is used in the stock solution, the non-solvent is preferably at least 80 weight%. When the amount of the non-solvent is too small, the coagulation rate of the resin becomes slow, the pore diameter of the surface becomes large, and a macrovoid is less likely to be generated. When a non-solvent is used in the stock solution, the ratio of the non-solvent in the coagulation bath is more preferably in a range of 85 weight% to 100 weight%.

On the other hand, when a non-solvent is not used in the stock solution, the content of the non-solvent in the coagulation bath is preferably smaller than a case that a non-solvent is used in the stock solution, and is preferably at least 60 weight%. When the content of the non-solvent is large, the coagulation rate of the resin is increased, the surface of the porous membrane becomes dense, and a macrovoid is generated inside the porous membrane, but fine cracks may be generated on the surface of the porous membrane. In this case, the content of the non-solvent is more preferably in a range of 60 weight% to 99 weight%. By adjusting the content of the solvent in the coagulation bath, the pore diameter of the surface of the porous membrane and the size of the macrovoid can be controlled. Incidentally, since the coagulation rate becomes too fast when the temperature of the coagulation bath is extremely high, and conversely, the coagulation rate becomes too slow when the temperature of the coagulation bath is extremely low, it is usually preferable to select the temperature of the coagulation bath within a range of 15°C to 80°C. A more preferable temperature range is 20°C to 60°C.

When forming a composite membrane in which the another layer is a support, the porous membrane is preferably formed on at least one surface of the support in the porous membrane forming step. The coating film of the stock solution can be formed on the support by applying the stock solution to the support or by immersing the support in the stock solution. When applying the stock solution, the stock solution may be applied to one surface or both surfaces of the support. In this case, although depending on the composition of the stock solution, it is preferable to use a support having a density of 0.7 g/cm$^3$ or less because appropriate impregnation of the stock solution into the support is performed.

After the porous membrane forming step is performed, it is preferable to provide a cleaning step for removing the solvent and the pore forming agent. A cleaning method may be appropriately selected according to types of the solvent and the pore forming agent and is not particularly limited, and examples thereof include a method of immersing the porous membrane in hot water at 60°C to 100°C for 1 minute to 10 minutes.

In the cleaning step, the solvent and the pore forming agent may not be completely removed. The porous membrane and composite membrane according to the present embodiment may contain the solvent and the pore forming agent described above as long as the effect of the present invention is not impaired.

The porous membrane according to the present embodiment can be applied to any of a reverse osmosis membrane, a nanofiltration membrane, an ultrafiltration membrane, and a microfiltration membrane. One or more appropriate membranes may be selected and combined according to the size of a separation target substance, but an ultrafiltration membrane and a microfiltration membrane are particularly preferable for treatment of sewage and wastewater. The water to be treated for the porous membrane according to the present embodiment is not particularly limited, and the present invention is suitably used in separation of activated sludge (membrane separation activated sludge treatment) for biological treatment of sewage or wastewater containing a suspension of relatively large particles.

EXAMPLES

Hereinafter, the present invention will be specifically described with reference to examples, but the present invention is not limited thereto.

(i) Average Number Density of Convex Portion Having Cross-sectional Area of 0.01 $\mu$m$^2$ to 0.10 $\mu$m$^2$ in Each Plane Having Height of 50 nm and 20 nm from Reference Surface of Surface of Porous Membrane

A porous membrane or a composite membrane was cut into 1 cm square and adhered to a sample table such that a surface to be measured was on an upper side, thereby preparing a sample. The surface of the porous membrane of this sample was observed with an atomic force microscope (Dimension FastScan, manufactured by Bruker AXS), and as described above, a cross-sectional area of the convex portion in each plane having a height of 50 nm and 20 nm from the reference surface of the surface was calculated. The number of convex portions having a cross-sectional area of 0.01 $\mu$m$^2$ to 0.10 $\mu$m$^2$ in this case was counted, and the average number density in each plane was calculated. Specific measurement conditions were as follows.

Scanning mode: contact mode
Probe: silicon cantilever (ScanAsyst-Air, manufactured by Bruker AXS)
Scanning range: 2.5 $\mu$m $\times$ 2.5 $\mu$m
Scanning rate: 0.5 Hz
Scanning resolution: 256 $\times$ 256
Measurement temperature: 25°C

Measurement was performed for arbitrarily selected 10 fields of view, and an average value of the average number density of the convex portions in the 10 fields of view per each plane was defined as the average number density of the convex portion having a cross-sectional area of 0.01 $\mu$m$^2$ to 0.10 $\mu$m$^2$.

(ii) Thickness of Layer Having Concave-Convex Structure of Porous Membrane

A sample for measuring a cross section of a porous membrane or a composite membrane was prepared by a frozen ultrathin sectioning method, and the thickness of the layer having a concave-convex structure including a macrovoid of the porous membrane observed under the following observation conditions was calculated using an SEM (S-5500, manufactured by Hitachi High-Tech Corporation).

Acceleration voltage: 5 kV
Observation magnification: 500 times

Measurement was performed for arbitrarily selected 10 fields of view, thicknesses of the observed layers having the concave-convex structure was measured, and an average value thereof was defined as the thickness of the layer having the concave-convex structure of the porous membrane.

(iii) Value of a and Value of b for Polymer Constituting Porous Membrane

A porous membrane or a composite membrane immersed in distilled water was frozen at -20°C using a cryostat (Jung CM3000, manufactured by Leica), and a section of the porous membrane (in the composite membrane, a section of the porous membrane at the surface portion) was collected and vacuum-dried at 25°C overnight. 5 mL of 0.1 M lithium chloride-added NMP was added to 5 mg of the porous membrane after the vacuum drying, and stirring was performed at 50°C for about 2 hours. The obtained polymer solution was injected into GPC-MALS (column: two Shodex KF-806M of $\varphi 8.0$ mm $\times$ 30 cm connected in series, manufactured by Showa Denko K.K.; differential refractometer: Optilab rEX, manufactured by Wyatt Technology; MALS: DAWN HeLEOS, manufactured by Wyatt Technology) under the following conditions and measured. The injected polymer solution was eluted from the column in a range of 27 minutes to 43 minutes.

Column temperature: 50°C
Detector temperature: 23°C
Solvent: 0.1M lithium chloride-added NMP
Flow rate: 0.5 mL/min
Injection amount: 0.3 mL

Based on a polymer concentration $c_i$ at an elution time ti obtained from the RI and an excess Rayleigh ratio $R_{\theta i}$ at the elution time ti obtained from the MALS, $\sin^2(\theta/2)$ and $(K \times c_i/R_{\theta i})^{1/2}$ were plotted (Berry plot or Zimm plot; the following formula 3), and an absolute molecular weight $M_{Wi}$ at each elution time ti was calculated based on a value of $\theta \rightarrow 0$ of an approximation formula. Here, K is an optical constant, and is calculated based on the following formula 2. In the formula 2, dn/dc is an amount of variation in refractive index of the polymer solution with respect to a variation in the polymer concentration, that is, a refractive index increment, but in a case where a polymer containing a polyvinylidene fluoride-based resin as a main component is to be measured and the above-mentioned solvent is used, a value of -0.050 mL/g can be applied as the refractive index increment.

$$K = 4\pi^2 \times n_0^2 \times (dn/dc)^2/(\lambda^4 \times N_0) \quad \text{(Formula 2)}$$

$n_0$: refractive index of solvent
dn/dc: refractive index increment
$\lambda$: wavelength of incident light in vacuum
$N_0$: avogadro number

[0071] The value of the rotation radius $<S^2>^{1/2}$ at each elution time ti was calculated based on the slope of the following formula 3.

$$(Kc_i/R_{\theta i})^{1/2} = M_{Wi}^{-1/2}\{1 + 1/6(4\pi n_0/\lambda)^2 <S^2>\sin^2(\theta/2)\} \quad \text{(Formula 3)}$$

The absolute molecular weight Mwi at each elution time ti calculated based on the formula 3 was plotted on the x axis, and the rotation radius $<S^2>^{1/2}$ at each elution time ti was plotted on the y axis, and values of a and b for the polymer constituting the porous membrane were obtained by approximation by the above-mentioned formula 1 in a range of the molecular weight of 14 to 1,000,000 so as to be within the measurement range of the detector. Incidentally, the approximation was performed in a manner of linear approximation by using the formula 1 as a log-log graph and applying the least squares method.

(iv) Short Diameter of Macrovoid of Porous Membrane

A sample for measuring a cross section of the porous membrane or the composite membrane was prepared by a frozen ultrathin sectioning method, and the short diameter of the macrovoid was calculated based on the size of the macrovoid observed under the following observation conditions using a SEM (S-5500, manufactured by Hitachi High-Tech Corporation).

Acceleration voltage: 5 kV
Observation magnification: 500 times

Measurement was performed for arbitrarily selected 10 fields of view, short diameters of the observed macrovoids was measured, and an average value thereof was defined as the short diameter of the macrovoid of the porous membrane.

(v) Average Pore Diameter of Surface of Porous Membrane

The surface of the porous membrane or the composite membrane was observed under the following observation conditions using a SEM (S-5500, manufactured by Hitachi High-Tech Corporation), and areas of 300 arbitrarily selected pores were measured, respectively. Based on the area of each pore, a diameter when assuming that the pore is a circle was calculated as a pore diameter, and an average value thereof was defined as the average pore diameter of the surface.

Acceleration voltage: 5 kV
Observation magnification: 10,000 times
Image processing software: ImageJ (Wayne Rasband, National Institutes of Health)

(vi) Pure Water Permeability of Porous Membrane or Composite Membrane

A porous membrane was cut into a circular shape having a diameter of 50 mm, set in a cylindrical filtration holder (Ultra Holder UHP-43K, manufactured by Advantec Toyo Kaisha, Ltd.), preliminarily permeated with distilled water at 25°C under a pressure of 5 kPa for 5 minutes, subsequently permeated to collect permeated water for 3 minutes, and converted into values per unit time (h) and unit membrane area ($m^2$) for calculation. Regarding a composite membrane including a support in addition to the porous membrane, the entire composite membrane including the support was evaluated.

(vii) Cake Filtration Resistance and Blockage Filtration Resistance of Porous Membrane or Composite Membrane

A porous membrane was cut into a circular shape having a diameter of 50 mm, immersed in ethanol overnight, then immersed in water for 2 hours or more and substituted, and set in a cylindrical filtration holder (Ultra Holder UHP-43K, manufactured by Advantec Toyo Kaisha, Ltd.). Activated sludge (50g) having a concentration of 7,000 mg/L was placed in the filtration holder, a stirring rate was adjusted to 450 rpm, a membrane permeation flux converted into a water permeation amount (cubic meter) per day per square meter of a membrane surface at an evaluation temperature of 25°C was filtered for 2 minutes at 3.0 $m^3/m^2$/day, a sludge filtration resistance calculated based on an amount of permeated water for the first 5 seconds during the filtration was defined as $R_{Ax}$, and a sludge filtration resistance calculated based on an amount of permeated water for the last 5 seconds was defined as $R_{Bx}$. The x represents the number of repetitions of the two-minute-filtration of the activated sludge, and x = 1 in the first filtration. Here, the filtration resistance was obtained based on the following formula 4.

$$R = P \times t \times S/(\mu \times L) \qquad (Formula\ 4)$$

R: filtration resistance
P: evaluation pressure
t: filtration time
S: membrane area
$\mu$: viscosity
L: amount of filtered water

After the filtration was stopped, stirring was performed at a stirring rate of 450 rpm for 1 minute. The remaining activated sludge solution in the filtration holder was taken out while the porous membrane was set in the filtration holder, the inside of the filtration holder was filled with distilled water, and stirring was performed at a stirring rate of 450 rpm for 1 minute.

The two-minute-filtration of activated sludge and membrane cleaning were repeated, and $R_{A1}$ to Ras and $R_{B1}$ to $R_{B5}$ were measured. $R_{Bm}$-$R_{Am}$ were obtained for values of m of 1 to 5, and an average value thereof was defined as the cake filtration resistance. In addition, $R_{An+1}$-$R_{An}$ were obtained for values of n of 1 to 4, and an average value thereof was defined as the blockage filtration resistance. Regarding a composite membrane including a support in addition to the porous membrane, the entire composite membrane including the support was evaluated. It can be evaluated that the smaller the values of the cake filtration resistance and the blockage filtration resistance, the more excellent the low-fouling properties of the porous membrane or the composite membrane.

(Example 1)

A mixture of 50 mass% of branched polyvinylidene fluoride (branched PVDF, weight average molecular weight: 730,000) and 50 mass% of linear polyvinylidene fluoride (linear PVDF, weight average molecular weight: 280,000) was used as "PVDF", PEG20,000 (weight average molecular weight: 20,000) was added as a pore forming agent, DMF was added as a solvent, and pure water was added as a non-solvent, followed by sufficient stirring at a temperature of 90°C to prepare a polymer solution having the following composition ratio.

PVDF: 17 weight%
PEG20,000: 8 weight%
DMF: 72 weight%
Pure water: 3 weight%

Next, a polyester fiber nonwoven fabric having a density of 0.6 g/cm$^3$ was used as a support, and the prepared polymer solution was applied to the surface thereof. Immediately after the application, the nonwoven fabric was immersed in pure water at 20°C for 5 minutes to form a porous membrane. Further, the porous membrane was immersed in hot water at 90°C for 2 minutes to wash away the solvent and the pore forming agent, thereby forming a composite membrane having a three-dimensional network structure.

Evaluation results of the obtained composite membrane are shown in Table 1. The average number density of the convex portion having a cross-sectional area of 0.01 $\mu m^2$ to 0.10 $\mu m^2$ in a plane having a height of 50 nm from the reference surface of the surface was 2.2/$\mu m^2$, the average number density of the convex portion having a cross-sectional area of 0.01 $\mu m^2$ to 0.10 $\mu m^2$ in a plane having a height of 20 nm from the reference surface of the surface was 3.4/$\mu m^2$, the value of a in the above-mentioned formula 1 was 0.38, the value of b was 0.24, the short diameter of the macrovoid was 78 $\mu m$, and both the pure water permeability as an index of the water permeability and the cake filtration resistance as an index of the low-fouling properties exhibited excellent values.

(Example 2)

A composite membrane having a three-dimensional network structure was formed in the same manner as in Example 1 except that the "PVDF" shown in Example 1 was changed to a branched PVDF.

Evaluation results of the obtained composite membrane are shown in Table 1. The average number density of the convex portion having a cross-sectional area of 0.01 $\mu m^2$ to 0.10 $\mu m^2$ in a plane having a height of 50 nm from the reference surface of the surface was 3.0/$\mu m^2$, the average number density of the convex portion having a cross-sectional area of 0.01 $\mu m^2$ to 0.10 $\mu m^2$ in a plane having a height of 20 nm from the reference surface of the surface was 4.8/$\mu m^2$, the value of a in the above-mentioned formula 1 was 0.31, the value of b was 0.47, the short diameter of the macrovoid was 91 $\mu m$, and both the pure water permeability and the cake filtration resistance exhibited excellent values.

(Example 3)

A composite membrane having a three-dimensional network structure was formed in the same manner as in Example 2 except that PEG10,000 (weight average molecular weight: 10,000) was used as the pore forming agent.

Evaluation results of the obtained composite membrane are shown in Table 1. The average number density of the convex portion having a cross-sectional area of 0.01 $\mu m^2$ to 0.10 $\mu m^2$ in a plane having a height of 50 nm from the reference surface of the surface was 1.8/$\mu m^2$, the average number density of the convex portion having a cross-sectional area of 0.01 $\mu m^2$ to 0.10 $\mu m^2$ in a plane having a height of 20 nm from the reference surface of the surface was 2.8/$\mu m^2$, the value of a in the above-mentioned formula 1 was 0.31, the value of b was 0.47, the short diameter of the macrovoid was 86 $\mu$m, and both the pure water permeability and the cake filtration resistance exhibited excellent values.

(Example 4)

A composite membrane having a three-dimensional network structure was formed in the same manner as in Example 2 except that PEG40,000 (weight average molecular weight: 40,000) was used as the pore forming agent.
Evaluation results of the obtained composite membrane are shown in Table 1. The average number density of the convex portion having a cross-sectional area of 0.01 $\mu$m$^2$ to 0.10 $\mu$m$^2$ in a plane having a height of 50 nm from the reference surface of the surface was 3.9/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 4.1/$\mu$m$^2$, the value of a in the above-mentioned formula 1 was 0.31, the value of b was 0.47, the short diameter of the macrovoid was 75 $\mu$m, and both the pure water permeability and the cake filtration resistance exhibited excellent values.

(Example 5)

A composite membrane having a three-dimensional network structure was formed in the same manner as in Example 1 except that polyoxyethylene sorbitan monooleate (Tween 80) was used as the pore forming agent.
Evaluation results of the obtained composite membrane are shown in Table 1. The average number density of the convex portion having a cross-sectional area of 0.01 $\mu$m$^2$ to 0.10 $\mu$m$^2$ in a plane having a height of 50 nm from the reference surface of the surface was 0.5/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 1.7/$\mu$m$^2$, the value of a in the above-mentioned formula 1 was 0.38, the value of b was 0.24, the short diameter of the macrovoid was 64 $\mu$m, and all of the pure water permeability, the cake filtration resistance, and the blockage filtration resistance exhibited excellent values.

(Example 6)

A composite membrane having a three-dimensional network structure was formed in the same manner as in Example 2 except that polyoxyethylene sorbitan monooleate (Tween 80) was used as the pore forming agent.
Evaluation results of the obtained composite membrane are shown in Table 2. The average number density of the convex portion having a cross-sectional area of 0.01 $\mu$m$^2$ to 0.10 $\mu$m$^2$ in a plane having a height of 50 nm from the reference surface of the surface was 0.5/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 2.2/$\mu$m$^2$, the value of a in the above-mentioned formula 1 was 0.31, the value of b was 0.47, the short diameter of the macrovoid was 69 $\mu$m, and all of the pure water permeability, the cake filtration resistance, and the blockage filtration resistance exhibited excellent values.

(Example 7)

A composite membrane having a three-dimensional network structure was formed in the same manner as in Example 2 except that polyoxyethylene sorbitan monostearate (Tween 60) was used as the pore forming agent.
Evaluation results of the obtained composite membrane are shown in Table 2. The average number density of the convex portion having a cross-sectional area of 0.01 $\mu$m$^2$ to 0.10 $\mu$m$^2$ in a plane having a height of 50 nm from the reference surface of the surface was 0.5/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 2.3/$\mu$m$^2$, the value of a in the above-mentioned formula 1 was 0.31, the value of b was 0.47, the short diameter of the macrovoid was 95 $\mu$m, and all of the pure water permeability, the cake filtration resistance, and the blockage filtration resistance exhibited excellent values.

(Example 8)

A composite membrane having a three-dimensional network structure was formed in the same manner as in Example 2 except that polyoxyethylene sorbitan monostearate (Tween 40) was used as the pore forming agent.
Evaluation results of the obtained composite membrane are shown in Table 2. The average number density of the convex portion having a cross-sectional area of 0.01 $\mu$m$^2$ to 0.10 $\mu$m$^2$ in a plane having a height of 50 nm from the reference surface of the surface was 0.4/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 2.4/$\mu$m$^2$, the value of a in the above-mentioned formula 1 was 0.31, the value of b was 0.47, the short diameter of the macrovoid was 60 $\mu$m, and all of the pure water permeability, the cake filtration resistance, and the blockage filtration resistance exhibited excellent values.

(Example 9)

A composite membrane having a three-dimensional network structure was formed in the same manner as in Example 6 except that the composition of the polymer solution was changed as follows.

PVDF: 20 weight%
Tween 80: 8 weight%
DMF: 69 weight%
Pure water: 3 weight%

Evaluation results of the obtained composite membrane are shown in Table 2. The average number density of the convex portion having a cross-sectional area of 0.01 $\mu$m$^2$ to 0.10 $\mu$m$^2$ in a plane having a height of 50 nm from the reference surface of the surface was 0/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 1.6/$\mu$m$^2$, the value of a in the above-mentioned formula 1 was 0.31, the value of b was 0.47, the short diameter of the macrovoid was 67 $\mu$m, and all of the pure water permeability, the cake filtration resistance, and the blockage filtration resistance exhibited excellent values.

(Example 10)

A composite membrane having a three-dimensional network structure was formed in the same manner as in Example 6 except that the composition of the polymer solution was changed as follows.

PVDF: 14 weight%
Tween 80: 8 weight%
DMF: 75 weight%
Pure water: 3 weight%

Evaluation results of the obtained composite membrane are shown in Table 2. The average number density of the convex portion having a cross-sectional area of 0.01 $\mu$m$^2$ to 0.10 $\mu$m$^2$ in a plane having a height of 50 nm from the reference surface of the surface was 0.2/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 1.1/$\mu$m$^2$, the value of a in the above-mentioned formula 1 was 0.31, the value of b was 0.47, the short diameter of the macrovoid was 76 $\mu$m, and all of the pure water permeability, the cake filtration resistance, and the blockage filtration resistance exhibited excellent values.

(Example 11)

A composite membrane having a three-dimensional network structure was formed in the same manner as in Example 6 except that the composition of the polymer solution was changed as follows.

PVDF: 17 weight%
Tween 80: 6 weight%
DMF: 74 weight%
Pure water: 3 weight%

Evaluation results of the obtained composite membrane are shown in Table 3. The average number density of the convex portion having a cross-sectional area of 0.01 $\mu$m$^2$ to 0.10 $\mu$m$^2$ in a plane having a height of 50 nm from the reference surface of the surface was 0.5/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 1.1/$\mu$m$^2$, the value of a in the above-mentioned formula 1 was 0.31, the value of b was 0.47, the short diameter of the macrovoid was 65 $\mu$m, and all of the pure water permeability, the cake filtration resistance, and the blockage filtration resistance exhibited excellent values.

(Example 12)

A composite membrane having a three-dimensional network structure was formed in the same manner as in Example 6 except that the composition of the polymer solution was changed as follows.

PVDF: 17 weight%
Tween 80: 10 weight%
DMF: 70 weight%
Pure water: 3 weight%

Evaluation results of the obtained composite membrane are shown in Table 3. The average number density of the convex portion having a cross-sectional area of 0.01 $\mu$m$^2$ to 0.10 $\mu$m$^2$ in a plane having a height of 50 nm from the reference surface of the surface was 0.5/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 2.9/$\mu$m$^2$, the value of a in the above-mentioned formula 1 was 0.31, the value of b was 0.47, the short diameter of the macrovoid was 75 $\mu$m, and all of the pure water permeability, the cake filtration resistance, and the blockage filtration resistance exhibited excellent values.

(Example 13)

A composite membrane having a three-dimensional network structure was formed in the same manner as in Example 6 except that DMAc was used as the solvent.
Evaluation results of the obtained composite membrane are shown in Table 3. The average number density of the convex portion having a cross-sectional area of 0.01 $\mu$m$^2$ to 0.10 $\mu$m$^2$ in a plane having a height of 50 nm from the reference surface of the surface was 0.2/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 3.2/$\mu$m$^2$, the value of a in the above-mentioned formula 1 was 0.31, the value of b was 0.47, the short diameter of the macrovoid was 73 $\mu$m, and all of the pure water permeability, the cake filtration resistance, and the blockage filtration resistance exhibited excellent values.

(Example 14)

A composite membrane having a three-dimensional network structure was formed in the same manner as in Example 6 except that NMP was used as the solvent.
Evaluation results of the obtained composite membrane are shown in Table 3. The average number density of the convex portion having a cross-sectional area of 0.01 $\mu$m$^2$ to 0.10 $\mu$m$^2$ in a plane having a height of 50 nm from the reference surface of the surface was 0/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 4.0/$\mu$m$^2$, the value of a in the above-mentioned formula 1 was 0.31, the value of b was 0.47, the short diameter of the macrovoid was 68 $\mu$m, and all of the pure water permeability, the cake filtration resistance, and the blockage filtration resistance exhibited excellent values.

(Comparative Example 1)

A composite membrane having a three-dimensional network structure was formed in the same manner as in Example 1 except that the "PVDF" shown in Example 1 was changed to a straight chain PVDF.
Evaluation results of the obtained composite membrane are shown in Table 4. The average number density of the convex portion having a cross-sectional area of 0.01 $\mu$m$^2$ to 0.10 $\mu$m$^2$ in a plane having a height of 50 nm from the reference surface of the surface was 0/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 0.5/$\mu$m$^2$, the value of a in the above-mentioned formula 1 was 0.42, the value of b was 0.16, the short diameter of the macrovoid was 50 $\mu$m, and the cake filtration resistance and the blockage filtration resistance were inferior to the results of the Examples.

(Comparative Example 2)

A composite membrane having a three-dimensional network structure was formed in the same manner as in Example 6 except that the "PVDF" shown in Example 6 was changed to a straight chain PVDF.

Evaluation results of the obtained composite membrane are shown in Table 4. The average number density of the convex portion having a cross-sectional area of 0.01 $\mu$m$^2$ to 0.10 $\mu$m$^2$ in a plane having a height of 50 nm from the reference surface of the surface was 0/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 0.6/$\mu$m$^2$, the value of a in the above-mentioned formula 1 was 0.42, the value of b was 0.16, the short diameter of the macrovoid was 62 $\mu$m, and the cake filtration resistance and the blockage filtration resistance were inferior to the results of the Examples.

(Comparative Example 3)

A composite membrane having a three-dimensional network structure was formed in the same manner as in Example 2 except that PEG4,000 (weight average molecular weight: 4,000) was used as the pore forming agent.
Evaluation results of the obtained composite membrane are shown in Table 4. The average number density of the convex portion having a cross-sectional area of 0.01 $\mu$m$^2$ to 0.10 $\mu$m$^2$ in a plane having a height of 50 nm from the reference surface of the surface was 0.4/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 0.7/$\mu$m$^2$, the value of a in the above-mentioned formula 1 was 0.31, the value of b was 0.47, the short diameter of the macrovoid was 55 $\mu$m, and the cake filtration resistance and the blockage filtration resistance were inferior to the results of the Examples.

(Comparative Example 4)

A composite membrane having a three-dimensional network structure was formed in the same manner as in Example 2 except that PEG100,000 (weight average molecular weight: 100,000) was used as the pore forming agent.
Evaluation results of the obtained composite membrane are shown in Table 4. The average number density of the convex portion having a cross-sectional area of 0.01 $\mu$m$^2$ to 0.10 $\mu$m$^2$ in a plane having a height of 50 nm from the reference surface of the surface was 4.5/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 3.2/$\mu$m$^2$, the value of a in the above-mentioned formula 1 was 0.31, the value of b was 0.47, the short diameter of the macrovoid was 68 $\mu$m, and the pure water permeability was inferior to the results of the Examples.

(Comparative Example 5)

A composite membrane having a three-dimensional network structure was formed in the same manner as in Example 6 except that the composition of the polymer solution was changed as follows.

PVDF: 17 weight%
Tween 80: 2 weight%
DMF: 78 weight%
Pure water: 3 weight%

Evaluation results of the obtained composite membrane are shown in Table 4. The average number density of the convex portion having a cross-sectional area of 0.01 $\mu$m$^2$ to 0.10 $\mu$m$^2$ in a plane having a height of 50 nm from the reference surface of the surface was 0/$\mu$m$^2$, the average number density of the convex portion having a cross-sectional area of 0.01 $\mu$m$^2$ to 0.10 $\mu$m$^2$ in a plane having a height of 20 nm from the reference surface of the surface was 0.6/$\mu$m$^2$, the value of a in the above-mentioned formula 1 was 0.42, the value of b was 0.16, the short diameter of the macrovoid was 58 $\mu$m, and the cake filtration resistance and the blockage filtration resistance were inferior to the results of the Examples.

[Table 1]

| | Unit | Example 1 | Example 2 | Example 3 | Example 4 | Example 5 |
|---|---|---|---|---|---|---|
| Polymer Solution Composition Ratio | - | PVDF/PEG 20,000/DMF/$H_2O$ = 17/8/72/3 | PVDF/PEG 20,000/DMF/$H_2O$ = 17/8/72/3 | PVDF/PEG 10,000/DMF/$H_2O$ = 17/8/72/3 | PVDF/PEG 40,000/DMF/$H_2O$ = 17/8/72/3 | PVDF/Tween 80/DMF/$H_2O$ = 17/8/72/3 |
| PVDF Composition Ratio | wt% | Branched PVDF/straight chain PVDF = 50/50 | Branched PVDF = 100 | Branched PVDF = 100 | Branched PVDF = 100 | Branched PVDF/straight chain PVDF = 50/50 |
| Average Number Density of Convex Portion Having Cross-Sectional Area of 0.01 $\mu$m$^2$ to 0.10 $\mu$m$^2$ in Plane Having Height of 50 nm | number/$\mu$m$^2$ | 2.2 | 3.0 | 1.8 | 3.9 | 0.5 |
| Average Number Density of Convex Portion Having Cross-Sectional Area of 0.01 $\mu$m$^2$ to 0.10 $\mu$m$^2$ in Plane Having Height of 20 nm | number/$\mu$m$^2$ | 3.4 | 4.8 | 2.8 | 4.1 | 1.7 |
| Thickness of Layer Having Concave-convex Structure | $\mu$m | 191 | 205 | 190 | 211 | 125 |
| Value of a in Formula 1 | - | 0.38 | 0.31 | 0.31 | 0.31 | 0.38 |
| Value of b in Formula 1 | - | 0.24 | 0.47 | 0.47 | 0.47 | 0.24 |
| Short Diameter of Macrovoid | $\mu$m | 78 | 91 | 86 | 75 | 64 |
| Average Pore Diameter of Surface | $\mu$m | 0.070 | 0.053 | 0.052 | 0.045 | 0.058 |
| Pure Water Permeability | m$^3$/m$^2$/hr | 0.85 | 0.98 | 0.94 | 0.76 | 1.19 |
| Cake Filtration Resistance | 10$^{10}$/m | 12,170 | 11,499 | 12,306 | 10,156 | 12,310 |
| Blockage Filtration Resistance | 10$^{10}$/m | 140 | 109 | 126 | 105 | 77 |

[Table 2]

| | Unit | Example 6 | Example 7 | Example 8 | Example 9 | Example 10 |
|---|---|---|---|---|---|---|
| Polymer Solution Composition Ratio | - | PVDF/Tween 80/DMF/H$_2$O = 17/8/72/3 | PVDF/Tween 60/DMF/H$_2$O = 17/8/72/3 | PVDF/Tween 40/DMF/H$_2$O = 17/8/72/3 | PVDF/Tween 80/DMF/H$_2$O = 20/8/69/3 | PVDF/Tween 80/DMF/H$_2$O = 14/8/75/3 |
| PVDF Composition Ratio | wt% | Branched PVDF = 100 | Branched PVDF = 100 | Branched PVDF = 100 | Branched PVDF = 100 | Branched PVDF = 100 |
| Average Number Density of Convex Portion Having Cross-Sectional Area of 0.01 $\mu$m$^2$ to 0.10 $\mu$m$^2$ in Plane Having Height of 50 nm | number/ $\mu$m$^2$ | 0.5 | 0.5 | 0.4 | 0.0 | 0.2 |
| Average Number Density of Convex Portion Having Cross-Sectional Area of 0.01 $\mu$m$^2$ to 0.10 $\mu$m$^2$ in Plane Having Height of 20 nm | number/ $\mu$m$^2$ | 2.2 | 2.3 | 2.4 | 1.6 | 1.1 |
| Thickness of Layer Having Concave-convex Structure | $\mu$m | 110 | 146 | 185 | 149 | 113 |
| Value of a in Formula 1 | - | 0.31 | 0.31 | 0.31 | 0.31 | 0.31 |
| Value of b in Formula 1 | - | 0.47 | 0.47 | 0.47 | 0.47 | 0.47 |
| Short Diameter of Macrovoid | $\mu$m | 69 | 95 | 60 | 67 | 76 |
| Average Pore Diameter of Surface | $\mu$m | 0.058 | 0.060 | 0.054 | 0.047 | 0.066 |
| Pure Water Permeability | m$^3$/m$^2$/hr | 1.18 | 2.07 | 1.13 | 0.75 | 3.58 |
| Cake Filtration Resistance | 10$^{10}$/m | 11,900 | 9,534 | 8,639 | 11,737 | 12,409 |
| Blockage Filtration Resistance | 10$^{10}$/m | 67 | 70 | 57 | 68 | 71 |

[Table 3]

| | Unit | Example 11 | Example 12 | Example 13 | Example 14 |
|---|---|---|---|---|---|
| Polymer Solution Composition Ratio | - | PVDF/Tween 80/DMF/$H_2$O = 17/6/7413 | PVDF/Tween 80/DMF/$H_2$O = 17/10/70/3 | PVDF/Tween 80/DMAc/$H_2$O = 17/8/72/3 | PVDF/Tween 80/NMP/$H_2$O = 17/8/72/3 |
| PVDF Composition Ratio | wt% | Branched PVDF = 100 | Branched PVDF = 100 | Branched PVDF = 100 | Branched PVDF = 100 |
| Average Number Density of Convex Portion Having Cross-Sectional Area of 0.01 $\mu$m$^2$ to 0.10 $\mu$m$^2$ in Plane Having Height of 50 nm | number/ $\mu$m$^2$ | 0.5 | 0.5 | 0.2 | 0.0 |
| Average Number Density of Convex Portion Having Cross-Sectional Area of 0.01 $\mu$m$^2$ to 0.10 $\mu$m$^2$ in Plane Having Height of 20 nm | number/ $\mu$m$^2$ | 1.1 | 2.9 | 3.2 | 4.0 |
| Thickness of Layer Having Concave-convex Structure | $\mu$m | 131 | 129 | 174 | 180 |
| Value of a in Formula 1 | - | 0.31 | 0.31 | 0.31 | 0.31 |
| Value of b in Formula 1 | - | 0.47 | 0.47 | 0.47 | 0.47 |
| Short Diameter of Macrovoid | $\mu$m | 65 | 75 | 73 | 68 |
| Average Pore Diameter of Surface | $\mu$m | 0.056 | 0.065 | 0.058 | 0.057 |
| Pure Water Permeability | m$^3$/m$^2$/hr | 1.11 | 1.46 | 1.40 | 0.97 |
| Cake Filtration Resistance | 10$^{10}$/m | 13,188 | 10,526 | 9,756 | 9,639 |
| Blockage Filtration Resistance | 10$^{10}$/m | 94 | 83 | 60 | 69 |

[Table 4]

| | Unit | Comparative Example 1 | Comparative Example 2 | Comparative Example 3 | Comparative Example 4 | Comparative Example 5 |
|---|---|---|---|---|---|---|
| Polymer Solution Composition Ratio | - | PVDF/PEG 20,000/DMF/$H_2O$ = 17/8/72/3 | PVDF/Tween 80/DMF/$H_2O$ = 17/8/72/3 | PVDF/PEG 4,000/DMF/$H_2O$ = 17/8/72/3 | PVDF/PEG 100,000/DMF/$H_2O$ = 17/8/72/3 | PVDF/Tween 80/DMF/$H_2O$ = 17/2/78/3 |
| PVDF Composition Ratio | wt% | Straight chain PVDF = 100 | Straight chain PVDF = 100 | Branched PVDF = 100 | Branched PVDF = 100 | Branched PVDF = 100 |
| Average Number Density of Convex Portion Having Cross-Sectional Area of 0.01 $\mu m^2$ to 0.10 $\mu m^2$ in Plane Having Height of 50 nm | number/$\mu m^2$ | 0.0 | 0.0 | 0.4 | 4.5 | 0.0 |
| Average Number Density of Convex Portion Having Cross-Sectional Area of 0.01 $\mu m^2$ to 0.10 $\mu m^2$ in Plane Having Height of 20 nm | number/$\mu m^2$ | 0.5 | 0.6 | 0.7 | 3.2 | 0.6 |
| Thickness of Layer Having Concave-convex Structure | $\mu m$ | 154 | 127 | 131 | 226 | 133 |
| Value of a in Formula 1 | - | 0.42 | 0.42 | 0.31 | 0.31 | 0.31 |
| Value of b in Formula 1 | - | 0.16 | 0.16 | 0.47 | 0.47 | 0.47 |
| Short Diameter of Macrovoid | $\mu m$ | 50 | 62 | 55 | 68 | 58 |
| Average Pore Diameter of Surface | $\mu m$ | 0.082 | 0.061 | 0.068 | 0.039 | 0.064 |
| Pure Water Permeability | $m^3/m^2/hr$ | 0.44 | 1.21 | 0.56 | 0.05 | 0.91 |
| Cake Filtration Resistance | $10^{10}$/m | 15,077 | 15,251 | 14,727 | 6,126 | 16,823 |
| Blockage Filtration Resistance | $10^{10}$/m | 236 | 173 | 158 | 28 | 332 |

Although the present invention has been described in detail with reference to specific embodiments, it will be apparent to those skilled in the art that various changes and modifications can be made without departing from the spirit and scope of the present invention. The present application is based on Japanese patent application (Japanese Patent Application No. 2020-094340) filed on May 29, 2020 and Japanese patent application (Japanese Patent Application No. 2020-198370) filed on November 30, 2020. The contents thereof are hereby incorporated by reference.

**Claims**

1. A porous membrane having a concave-convex structure including a convex portion and a concave portion on at least one surface of the porous membrane,

   wherein an average number density of the convex portion having a cross-sectional area of 0.01 $\mu$m$^2$ to 0.10 $\mu$m$^2$ in a plane having a height of 50 nm from a reference surface of the surface is 4.0/$\mu$m$^2$ or less, and
   an average number density of the convex portion having a cross-sectional area of 0.01 $\mu$m$^2$ to 0.10 $\mu$m$^2$ in a plane having a height of 20 nm from the reference surface of the surface is 1.0/$\mu$m$^2$ or more.

2. The porous membrane according to claim 1, wherein the average number density of the convex portion having a cross-sectional area of 0.01 $\mu$m$^2$ to 0.10 $\mu$m$^2$ in a plane having a height of 50 nm from the reference surface of the surface is 1.0/$\mu$m$^2$ or less.

3. The porous membrane according to claim 1 or 2, wherein a layer having the concave-convex structure has a thickness of 1 $\mu$m to 500 $\mu$m.

4. The porous membrane according to any one of claims 1 to 3, wherein the surface comprises a polymer.

5. The porous membrane according to claim 4, wherein the polymer is a polymer comprising a polyvinylidene fluoride-based resin as a main component.

6. The porous membrane according to claim 5, comprising a branched polyvinylidene fluoride-based resin as the polyvinylidene fluoride-based resin.

7. The porous membrane according to any one of claims 4 to 6, wherein a value of a and a value of b for the polymer are 0.27 to 0.39 and 0.22 to 0.60 respectively, which are determined by approximation by the following Formula 1 based on a rotation radius $<S^2>^{1/2}$ and an absolute molecular weight $M_w$ of the polymer that are measured by GPC-MALS (gel permeation chromatography equipped with a multi-angle light scattering detector).

$$<S^2>^{1/2} = bM_w^a \quad \text{(Formula 1)}$$

8. The porous membrane according to claim 7, wherein the value of a is 0.29 to 0.33, and the value of b is 0.43 to 0.50.

9. The porous membrane according to any one of claims 4 to 8, further comprising a surfactant.

10. The porous membrane according to claim 9, comprising a surfactant having a polyoxyalkylene structure, a fatty acid ester structure, and a hydroxyl group.

11. The porous membrane according to any one of claims 1 to 10,

    wherein an average pore diameter of the surface is 0.01 $\mu$m to 0.1 $\mu$m, and
    a macrovoid having a short diameter of 60 $\mu$m or more is present.

12. The porous membrane according to claim 11, wherein a macrovoid having a short diameter of 80 $\mu$m or more is present.

13. The porous membrane according to any one of claims 1 to 12, having a three-dimensional network structure.

14. A composite membrane comprising the porous membrane according to any one of claims 1 to 13 and another layer.

**15.** The composite membrane according to claim 14, wherein the another layer is a support.

**16.** The porous membrane according to any one of claims 1 to 13 or the composite membrane according to claim 14 or 15, being used for ultrafiltration or microfiltration.

**17.** The porous membrane or composite membrane according to claim 16, being used for membrane separation activated sludge treatment.

## FIG. 1

## FIG. 2

50µm

## INTERNATIONAL SEARCH REPORT

International application No.

PCT/JP2021/019654

### A. CLASSIFICATION OF SUBJECT MATTER

B01D 61/14(2006.01)i; B01D 61/18(2006.01)i; B01D 69/00(2006.01)i; B01D 69/02(2006.01)i; B01D 69/10(2006.01)i; B01D 69/12(2006.01)i; B01D 71/06(2006.01)i; B01D 71/34(2006.01)i; C02F 3/12(2006.01)i; C08J 9/26(2006.01)i; C02F 1/44(2006.01)i

FI:      B01D69/00; B01D61/14 500; B01D61/18; B01D69/10; B01D69/12; B01D71/06; B01D71/34; C02F3/12 S; C08J9/26 102; C02F1/44 F; C08J9/26 CEW; B01D69/02

According to International Patent Classification (IPC) or to both national classification and IPC

### B.   FIELDS SEARCHED

Minimum documentation searched (classification system followed by classification symbols)

B01D61/14; B01D61/18; B01D69/00; B01D69/02; B01D69/10; B01D69/12; B01D71/06; B01D71/34; C02F3/12; C08J9/26; C02F1/44

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
|---|---|---|
| Y | JP 2011-189266 A (TORAY INDUSTRIES, INC.) 29 September 2011 (2011-09-29) paragraphs [0001], [0051] | 1–17 |
| Y | JP 2016-510688 A (ARKEMA INC.) 11 April 2016 (2016-04-11) paragraph [0011] | 1–17 |

☐   Further documents are listed in the continuation of Box C.          ☒   See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 08 July 2021 (08.07.2021) | 20 July 2021 (20.07.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/019654

| Patent Documents referred in the Report | Publication Date | Patent Family | Publication Date |
|---|---|---|---|
| JP 2011-189266 A | 29 Sep. 2011 | (Family: none) | |
| JP 2016-510688 A | 11 Apr. 2016 | US 2016/0008772 A1 paragraph [0011] WO 2014/137721 A1 EP 2964370 A1 AU 2014226305 A1 CN 105008029 A KR 10-2015-0124998 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06343843 A
- US 200336085

- JP 2020094340 A
- JP 2020198370 A

**Non-patent literature cited in the description**

- **MORI SADAO.** Size Exclusion Chromatography. Kyoritsu Shuppan Co., Ltd, 1992